# FASCICULE DE BREVET EUROPEEN

(11) **EP 0 567 521 B1**
(45) Date de publication et mention de la délivrance du brevet: **04.10.1995**
(21) Numéro de dépôt: 92903129.2
(22) Date de dépôt: 30.12.1991
(51) Int. Cl.: B60C 15/00

(54) **PNEUMATIQUE POUR LOURDES CHARGES ET GONFLE A PRESSION ELEVEE**
LUFTREIFEN FÜR SCHWERLASTEN MIT HOHEM DRUCK
TYRE FOR HEAVY LOADS INFLATED TO HIGH PRESSURE

(30) Priorité: 14.01.1991 FR 9100403
(43) Date de publication de la demande: 03.11.1993
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: CESAR, Jean-Pierre, F-63530 Volvic (FR); MASSY, Antoine, F-63400 Chamalières (FR)
(74) Mandataire: Devaux, Edmond-Yves
(86) Numéro de dépôt international: FR9101081
(87) Numéro de publication internationale: WO9212020

(56) Documents cités:
- FR-A- 1 427 189
- FR-A- 1 600 345
- FR-A- 2 507 970
- US-A- 4 029 137
- PATENT ABSTRACTS OF JAPAN vol. 9, no. 67 (M-366)(1790) 27 Mars 1985 & JP-A-59 199 303 (SUMITOMO GOMU KOGYO K.K.) 12 Novembre 1984

## Description

L'invention concerne des pneumatiques à armature de carcasse radiale destinés à porter de lourdes charges et gonflés à des pressions relativement fortes, et en particulier les pneumatiques pour avions.

Les armatures de carcasse radiales de tels pneumatiques comportent généralement plusieurs nappes de câbles textiles, qui sont ancrées dans chaque bourrelet à au moins une tringle et le plus souvent une seule tringle. Les éléments de renforcement de ces armatures sont enroulés autour de ladite tringle de l'intérieur à l'extérieur en formant des retournements dont les extrémités respectives sont radialement espacées par rapport à l'axe de rotation du pneumatique. Les conditions sévères sous lesquelles sont utilisés les pneumatiques pour avions, et en particulier les surcharges imposées sont telles que l'endurance des bourrelets est faible, en particulier au niveau des extrémités des retournements de l'armature de carcasse.

Une amélioration notable des performances est obtenue par la séparation des nappes de l'armature de carcasse en deux groupes. Le premier groupe comprend les nappes de l'armature de carcasse axialement intérieures dans la zone des bourrelets, ces nappes sont alors enroulées autour d'une tringle dans chaque bourrelet en allant de l'intérieur à l'extérieur du pneumatique. Le deuxième groupe est constitué d'au moins une nappe axialement extérieure dans la zone des bourrelets, nappe généralement enroulée autour de la tringle en allant de l'extérieur à l'intérieur du pneumatique.

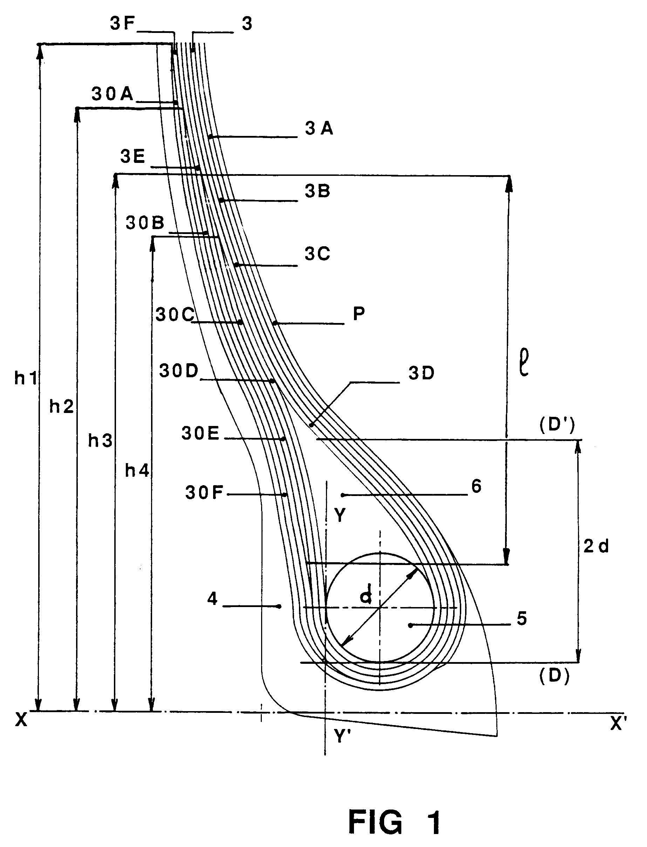

De telles dispositions sont connues et montrées par exemple dans le brevet US 4 244 414 (Fig. 2).

Le brevet FR-A-2 507 970 montre un pneumatique gonflé à pression élevée, avec une bande de roulement, une armature de sommet et une armature de carcasse radiale comprenant une nappe axialement intérieure de câbles textiles enroulée autour d'une tringle dans chaque bourrelet de l'intérieur à l'extérieur du pneumatique en formant des retournements et au moins une nappe axialement extérieure de câbles textiles, superposée à la nappe intérieure sous l'armature de sommet et se séparant de ladite nappe dans les bourrelets pour s'étendre le long des retournements de la nappe axialement intérieure, les extrémités de la nappe axialement extérieure étant disposées axialement à l'extérieur de la tringle et radialement sensiblement au niveau de la base de la tringle.

Ce pneumatique n'est pas fait pour l'équipement d'un avion, en particulier gros porteur. Dans le cas de plusieurs nappes, l'endurance des bourrelets ainsi constitués reste insuffisante et ce manque d'endurance se traduit par des décollages entre les nappes extérieures et/ou la dernière nappe extérieure et la gomme qui la recouvre, gomme formant l'extérieur du bourrelet et/ou du flanc ; ces décollages s'accompagnant généralement de fatigue des câbles de ces nappes.

L'invention propose une solution pour améliorer la durée de vie des bourrelets des pneumatiques concernés, tout en utilisant des tringles dont les diamètres intérieurs sont les plus faibles possible, ce qui permet un meilleur appui sur les rebords de jante, ladite solution consistant à disposer le(les) bord(s) de la (des) nappes axialement extérieures entre les retournements des nappes axialement intérieures, sans enroulement autour des tringles.

Conformément à l'invention, un pneumatique pour avions, gonflé à pression élevée, avec une bande de roulement, une armature de sommet et une armature de carcasse radiale comprenant une nappe axialement intérieure de câbles textiles, enroulées autour d'une tringle dans chaque bourrelet de l'intérieur à l'extérieur du pneumatique en formant des retournements et au moins une nappe axialement extérieure de câbles textiles, superposée à la nappe intérieure sous l'armature de sommet et se séparant de ladite nappe intérieure dans les bourrelets pour s'étendre le long desdits retournements dans les bourrelets, les extrémités des bords de la (des) nappe(s) axialement extérieure(s) étant disposées axialement à l'extérieur d'une droite perpendiculaire à l'axe de rotation du pneumatique et tangent au cercle circonscrit à la tringle en son point axialement le plus à l'extérieur, et radialement à l'extérieur d'une droite parallèle à l'axe de rotation du pneumatique et tangente aux cercles circonstrits aux tringles en leurs points les plus proches de l'axe de rotation, est caractérisé en ce que la carcasse comprend au moins deux nappes axialement intérieures et en ce que chacune des nappes extérieures a ses bords disposés entre les retournements des deux nappes intérieures adjacentes.

Dans le cas de plusieurs nappes axialement extérieures, on obtient aussi une répartition homogène des tensions sur ces dernières. Dans le même but, les extrémités des retournements des nappes axialement intérieures sont préférentiellement distantes de la base du bourrelet d'une hauteur au moins égale à 0,25 fois la hauteur du pneumatique monté sur sa jante de service et gonflé à sa pression de service, ladite hauteur étant mesurée au niveau de la fibre moyenne de l'armature de carcasse radiale.

De la même manière, lesdits retournements ont des extrémités radialement espacées, la différence entre les distances radiales des extrémités de deux retournements ajacents étant au moins égale à 0,03 fois la hauteur du pneumatique sur jante, les distances radiales étant toutes différentes l'une de l'autre.

En outre la distance commune ou distance radiale de jonction entre une nappe axialement extérieure et les deux nappes axialement intérieures qui l'enserrent est avantageusement supérieure à 0,15 fois la hauteur sur jante du pneumatique.

La présence de retournements suffisamment longs ainsi que le fait que leurs extrémités soient espacées radialement permet aussi d'obtenir un avantage certain qui est celui d'augmenter, de manière conséquente, la valeur de la pression d'épreuve à laquelle doit résister le pneumatique pour avion. Si l'on se rappelle que la pression d'épreuve doit être égale à quatre fois la pression de service, il est alors possible d'augmenter la pression de gonflage utilisée pour le pneumatique en service normal, ou ce qui est préférable, d'alléger le pneumatique en gardant les pressions de service et d'épreuve constantes.

L'endurance des bourrelets est encore améliorée si le retournement le plus long est celui de la première nappe axialement intérieure et le retournement le plus court celui de la dernière nappe axialement intérieure, tous les retournements étant espacés de la même distance radiale.

De manière préférentielle, les extrémités de la (des) nappe(s) axialement extérieures sont disposées à l'intérieur d'une deuxième droite parallèle à l'axe de rotation et distante radialement, de la première droite tangente aux cercles circonscrits aux sections de tringle en leurs points les plus proches radialement de l'axe de rotation, d'une quantité égale à deux fois le diamètre des cercles circonscrits aux sections de tringle.

L'invention sera mieux comprise à l'aide de la description qui va suivre, faite en référence au dessin schématique annexé et donné à titre d'exemple. Sur ce dessin, la figure unique 1 est une vue schématique d'un bourrelet du pneumatique conforme à l'invention.

L'exemple donné est celui d'un pneumatique pour avion de dimension 46x17,0 R 20 monté sur une jante de dimension 13.25 x 20 normalisée (normes de la Tire and Rim Association). L'armature de carcasse (3) est formée de six nappes (3A à 3F) de carcasse de câbles textiles.

Parmi ces six nappes, quatre nappes axialement intérieures (3A à 3D) sont enroulées dans chaque bourrelet (4), autour d'une tringle (5) de section transversale circulaire, en allant de l'intérieur à l'extérieur du pneumatique (P) en formant les retournements (30A à 30D). Les extrémités de ces retournements sont distants de la base du bourrelet, représentée par une ligne (XX') parallèle à l'axe de rotation du pneumatique et passant par le point d'intersection de la paroi verticale du bourrelet et de la génératrice tronconique de son siège, des hauteurs respectives h₁, h₂, h₃, h₄. La hauteur h₁, la plus grande, est la hauteur du retournement (30A) de la première nappe (3A) axialement intérieure, alors que la hauteur h₄, la plus petite, est la hauteur du retournement (30D) de la dernière nappe (3D) axialement intérieure, les hauteurs intermédiaires h₂ et h₃ étant celles des retournements (30B et 30C) des nappes intermédiaires (3B et 3C). Ces hauteurs h₁ à h₄ sont respectivement égales à 33 %, 38 %, 43 % et 48 % de la hauteur H du pneumatique sur la jante, égale à 290 mm.

Par définition, la hauteur (non montrée) du pneumatique, monté et gonflé, est la distance radiale mesurée entre une parallèle à l'axe de rotation passant par le point sommet de la fibre moyenne de l'armature de carcasse et une parallèle à l'axe de rotation, distante dudit axe d'une quantité égale au rayon nominal normalisé de la jante de service.

Les nappes de carcasse (3E et 3F) axialement extérieures ont leurs bords (30E et 30F) qui sont disposés respectivmeent entre les retournements (30C) et (30B) des nappes intérieures (3C) et (3B) et les retournements (30C) et (30D) des nappes (3C) et (3D). Les extrémités de ces nappes (3E) et (3F) sont situées, vues en section méridienne, axialement à l'extérieur de la ligne (YY') perpendiculaire à l'axe de rotation du pneumatique, donc à (XX') et tangente au cercle circonscrit à la tringle (5) en son point axialement le plus à l'extérieur. Elles sont radialement situées au niveau de la tringle (5), entre la droite (D), parallèle à l'axe de rotation du pneumatique et tangente à la base du cercle circonscrit à la tringle (5) de la droite (D') parallèle à (D) et distante radialement de (D) de la quantité 2d, d étant le diamètre de la tringle (5).

Comparativement à un pneumatique de même dimension, comportant une armature de carcasse ayant le même nombre de nappes axialement intérieures et le même nombre de nappes axialement extérieures, mais dont les nappes extérieures recouvrent les retournements des nappes intérieures, comme monté par exemple sur la figure 2 du brevet US 4 244 414 cité, le pneumatique, conforme à l'invention, sous des conditions de charge égale à 19 600 kg et de pression de gonflage égale à 14,8 bars a effectué 3000 cycles, soit environ 30 % de plus que le pneumatique témoin qui a réalisé 2300 cycles, le roulage étant effectué sur un volant et un cycle reproduisant une phase de roulage sous charge suivie d'une phase avec suppression de la charge.

En outre, le pneumatique conforme à l'invention présente une pression d'éclatement supérieure de 15 % à la pression d'éclatement du témoin et très supérieure à la pression d'épreuve normale pour la dimension étudiée.

## Revendications

1. Pneumatique pour avions, gonflé à pression élevée, avec une bande de roulement, une armature de sommet et une armature de carcasse radiale (3) comprenant une nappe axialement intérieure (3A, 3B, 3C, 3D) de câbles textiles, enroulées autour d'une tringle (5) dans chaque bourrelet (4) de l'intérieur à l'extérieur du pneumatique en formant des retournements (30A, 30B, 30C, 30D) et au moins une nappe axialement extérieure (3E, 3F) de câbles textiles, superposée à la nappe intérieure sous l'armature de sommet et se séparant de ladite nappe intérieure dans les bourrelets (4) pour s'étendre le long desdits retournements dans les bourrelets (4), les extrémités des bords (30E, 30F) de la des nappes axialement extérieures (3E, 3F) étant disposées axialement à l'extérieur d'une droite (Y, Y') perpendiculaire à l'axe de rotation du pneumatique et tangent au cercle circonscrit à la tringle (5) en son point axialement le plus à l'extérieur, et radialement à l'extérieur d'une droite D parallèle à l'axe de rotation du pneumatique et tangente aux cercles circonscrits au tringle (5) en leurs points les plus proches de l'axe de rotation, caractérisé en ce que la carcasse (3) comprend au moins deux nappes axialement intérieures (3A, 3B, 3C, 3D) et en ce que chacune des nappes extérieures (3E, 3F) a ses bords (30E, 30F) disposés entre les retournements de deux nappes intérieures adjacentes.

2. Pneumatique selon la revendication 1, caractérisé en ce que les extrémités des retournements (30A, 30B, 30C, 30D) des nappes intérieures (3A, 3B, 3C, 3D) sont distantes de la base des bourrelets (4) d'une hauteur au moins égale à 0,25 fois la hauteur (H) du pneumatique sur jante, mesurée au niveau de la fibre moyenne de l'armature de carcasse (3).

3. Pneumatique selon la revendication 2, caractérise en ce que les distances radiales (h₁, h₂, h₃, h₄) séparant les extrémités des retournements (30A, 30B, 30C, 30D) de la base des bourrelets (4) sont différentes l'une de l'autre, la différence entre deux de ces distances étant au moins égale à 0,03 fois la hauteur H du pneumatique sur jante.

4. Pneumatique selon l'une des revendications 1 à 3, caractérisé en ce que la distance radiale (1) commune entre une nappe axialement extérieure (3E, 3F) et les deux nappes axialement intérieures qui l'enserrent est au moins égale à 0,15 fois la hauteur H du pneumatique sur jante.

5. Pneumatique selon la revendication 2 ou 3 comprenant une carcasse à quatre nappes intérieures, caractérisé en ce que la première nappe axialement intérieure (3A) a les retournements (30A) dont les extrémités sont séparées de la base des bourrelets (4) d'une hauteur h₁ la plus grande, égale à 0,5 H, la quatrième nappe axialement intérieure (3D) ayant les retournements (30D) dont les extrémités sont séparées de la base des bourrelets (4) d'une hauteur h₄ la plus petite et égale à 0,25 H, h₂ et h₃ étant les distances relatives aux extrémités des retournements (30B, 30C) des nappes intermédiaires (3B, 3C) telles que h₁ > h₂, h₃ > h₄.

6. Pneumatique selon l'une des revendications 1 à 4, caractérisé en ce que les extrémités des bords (30E, 30F) des nappes extérieures (3E, 3F) sont disposées radialement à l'intérieur d'une droite (D') parallèle à la droite (D) et distante radialement de celle-ci d'une quantité égale à 2d, d étant le diamètre du cercle circonscrit à la section de la tringle (5).

## Claims

1. A tyre for aeroplanes, inflated to a high pressure, having a tread, a crown reinforcement and a radial carcass reinforcement (3) comprising an axially inner ply (3A, 3B, 3C, 3D) of textile cords, wound around a bead wire (5) in each bead (4) from the inside to the outside of the tyre, forming upturns (30A, 30B, 30C, 30D), and at least one axially outer ply (3E, 3F) of textile cords superimposed on the inner ply below the crown reinforcement and separating from said inner ply in the beads (4) in order to extend along said upturns in the beads (4), the ends of the edges (30E, 30F) of the axially outer plies (3E, 3F) being disposed axially to the outside of a straight line (Y, Y') perpendicular to the axis of rotation of the tyre and tangent to the circle circumscribed on the bead wire (5) at its point axially furthest to the outside, and radially to the outside of a straight line D parallel to the axis of rotation of the tyre and tangent to the circles circumscribed on the bead wire (5) at their points closest to the axis of rotation, characterised in that the carcass (3) comprises at least two axially inner plies (3A, 3B, 3C, 3D) and in that each of the outer plies (3E, 3F) has its edges (30E, 30F) disposed between the upturns of two inner adjacent plies.

2. A tyre according to Claim 1, characterised in that the ends of the upturns (30A, 30B, 30C, 30D) of the inner plies (3A, 3B, 3C, 3D) are spaced from the base of the beads (4) by a height at least equal to 0.25 times the height (H) of the tyre on its rim, measured at the level of the centre line of the carcass reinforcement (3).

3. A tyre according to Claim 2, characterised in that the radial distances (h₁, h₂, h₃, h₄) separating the ends of the upturns (30A, 30B, 30C, 30D) from the base of the beads (4) are different from each other, the difference between two of these distances being at least equal to 0.03 times the height H of the tyre on the rim.

4. A tyre according to one of Claims 1 to 3, characterised in that the common radial distance (1) between an axially outer ply (3E, 3F) and the two axially inner plies which surround it is at least equal to 0.15 times the height H of the tyre on the rim.

5. A tyre according to Claim 2 or 3, comprising a carcass with four inner plies, characterised in that the first axially inner ply (3A) has upturns (30A) the ends of which are separated from the base of the beads (4) by a height h₁ which is the largest, equal to 0.5 H, the fourth axially inner ply (3D) having upturns (30D) the ends of which are separated from the base of the beads (4) by a height h₄ which is the smallest and is equal to 0.25 H, h₂ and h₃ being the relative distances to the ends of the upturns (30B, 30C) of the intermediate plies (3B, 3C) such that h₁ > h₂, h₃ > h₄.

6. A tyre according to one of Claims 1 to 4, characterised in that the ends of the edges (30E, 30F) of the outer plies (3E, 3F) are disposed radially to the inside of a straight line (D') parallel to the straight line (D) and spaced radially from it by an amount equal to 2d, d being the diameter of the circle circumscribed on the cross-section of the bead wire (5).

## Patentansprüche

1. Hochdruckluftreifen für Flugzeuge mit einem Laufstreifen, einer Scheitelbewehrung und einer radialen Karkassenbewehrung (3), die eine axial innere Einlage (3A, 3B, 3C, 3D) aus Textilseilen, die in jedem Wulst (4) vom Reifeninneren zum -äußeren unter Ausbildung von Rückführungen (30A, 30B, 30C, 30D) um einen Wulstkern (5) gewickelt sind, und wenigstens eine axial äußere Einlage (3E, 3F) aus Textilseilen umfaßt, die über der inneren Einlage unter der Scheitelbewehrung angeordnet ist, sich in den Wülsten (4) von der inneren Einlage trennt und sich entlang der Rückführungen in den Wülsten (4) erstreckt, wobei die Enden der Ränder (30E, 30F) der axial äußeren Einlage(n) (3E, 3F) axial außerhalb einer Geraden (YY') angeordnet sind, die senkrecht zur Drehachse des Luftreifens liegt und den Umkreis des Wulstkerns (5) an seinem axial äußersten Punkt berührt, und radial außerhalb einer Geraden (D) angeordnet sind, die parallel zur Drehachse des Luftreifens liegt und die Umkreise des Wulstkerns (5) an ihren der Drehachse nächstliegenden Punkten berührt, dadurch **gekennzeichnet,** daß die Karkasse (3) wenigstens zwei axial innere Einlagen (3A, 3B, 3C, 3D) umfaßt und die Ränder (30E, 30F) einer jeden äußeren Einlage (3E, 3F) zwischen den Rückführungen von zwei benachbarten inneren Einlagen angeordnet sind.

2. Luftreifen nach Anspruch 1,
dadurch gekennzeichnet, daß
die Enden der Rückführungen (30A, 30B, 30C, 30D) der inneren Einlagen (3A, 3B, 3C, 3D) von der Basis der Wülste (4) einen Höhenabstand von wenigstens dem 0,25-fachen der Höhe (H) des Luftreifens auf der Felge haben, gemessen in Höhe der mittleren Faser der Karkassenbewehrung (3).

3. Luftreifen nach Anspruch 2,
dadurch gekennzeichnet, daß
die radialen Abstände (h₁, h₂, h₃, h₄) zwischen den Enden der Rückführungen (30A, 30B, 30C, 30D) und der Basis der Wülste (4) sich voneinander unterscheiden, wobei die Differenz zwischen zwei dieser Abstände wenigstens gleich dem 0,03-fachen der Höhe H des Luftreifens auf der Felge ist.

4. Luftreifen nach einem der Ansprüche 1 bis 3,
dadurch gekennzeichnet, daß
der gemeinsame radiale Abstand (1) zwischen einer axial äußeren Einlage (3E, 3F) und den zwei diese umschließenden axial inneren Einlagen wenigstens gleich dem 0,15-fachen der Höhe H des Luftreifens auf der Felge ist.

5. Luftreifen nach Anspruch 2 oder 3 mit einer Karkasse mit vier inneren Einlagen,
dadurch gekennzeichnet, daß
die Enden der Rückführungen (30A) der ersten axial inneren Einlage (3A) von der Basis der Wülste (4) den größten Höhenabstand h₁ von 0,5 H haben, die Enden der Rückführungen (30D) der vierten axial inneren Einlage (3D) den kleinsten Höhenabstand h₄ von der Basis der Wülste (4) von 0,25 H haben und für die Abstände h₂ und h₃ der Enden der Rückführungen (30B, 30C) der Zwischeneinlagen (3B, 3C) h₁ > h₂, h₃ > h₄ gilt.

6. Luftreifen nach einem der Ansprüche 1 bis 4,
dadurch gekennzeichnet, daß
die Enden der Ränder (30E, 30F) der äußeren Einlagen (3E, 3F) radial innerhalb einer Geraden (D') angeordnet sind, die parallel zur Geraden (D) liegt und von dieser einen radialen Abstand von 2d hat, wobei d der Durchmesser des Umkreises des Querschnitts des Wulstes (5) ist.
